# EUROPÄISCHE PATENTSCHRIFT

(11) **EP 0 841 381 B1**
(45) Veröffentlichungstag und Bekanntmachung des Hinweises auf die Patenterteilung: **05.12.2001**
(21) Anmeldenummer: 97116696.2
(22) Anmeldetag: 25.09.1997
(51) Int. Cl.: C09D 11/16

(54) **Schreibflüssigkeit**
Writing fluid
Liquide d'écriture

(30) Priorität: 09.11.1996 DE 19646321
(43) Veröffentlichungstag der Anmeldung: 13.05.1998
(73) Patentinhaber: STS Schreibgeräte Technik Schwarzwald GmbH & Co. KG, 78112 St. Georgen (DE)
(72) Erfinder: Haisch, Peter Andreas, Dr. rer. nat., 72800 Eningen (DE); Frick, Klaus, Dr. rer. nat., 78086 Brigachtal (DE)
(74) Vertreter: Patentanwälte Westphal, Mussgnug & Partner

(56) Entgegenhaltungen:
- EP-A- 0 587 391
- DE-A- 3 337 866
- GB-A- 2 094 820
- US-A- 4 686 246
- US-A- 5 466 281
- FALBE, J.; REGITZ, M.: "Römpp Chemie Lexikon", , GEORG THIEME VERLAG, STUTTGART

## Beschreibung

Die vorliegende Erfindung betrifft eine Schreibflüssigkeit höherer Viskosität, welche pigmentierte Färbemittel und ein Biopolymer enthält und für Schreibgeräte mit viskoelastischen Nachfolgeelementen geeignet ist, wobei polare, hochviskose Lösungsmittel in Kombination mit speziellen relativ unpolaren, niedrigviskosen Lösungsmitteln verwendet werden.

Die mit der Erfindung vorgeschlagene, durch bekannte Mittel zusätzlich verdickte Schreibflüssigkeit zeichnet sich durch einen Viskositätsbereich von 1,1 · 10³ bis 40 · 10³ [mPa·s] bei 0.3 U/min (gemessen mit einem Brookfield Viskosimeter, Spindel 31, T = 20°C) aus.

Schreibflüssigkeiten sehr hoher Viskosität, sog. Schreibpasten, werden wegen ihrer leichten Handhabbarkeit bevorzugt in Schreibgeräten verwendet. Nachteiligerweise erfordern derartige Schreibgeräte wegen des geringen Tintenflusses einen relativ hohen Anpreßdruck. Ein weiterer Nachteil ist, daß die erzeugte Schrift wegen des schlechten Trocknens leicht verwischt. Schreibflüssigkeiten sehr niedriger Viskosität hingegen haben zwar einen wünschenswert hohen Tintenfluß, was ein sehr gutes Schriftbild und den oft geforderten Weichschreibeffekt zur Folge hat. Jedoch ist die Aufbewahrung der Schreib-/ flüssigkeit in einem Speichersystem oder Tank schwierig und kostspielig. Für diese Schreibflüssigkeiten geeignete Systeme reagieren außerdem äußerst empfindlich auf Druck- oder Temperaturschwankungen, was die Verwendung aufwendiger Reglersysteme erforderlich macht. Einfacher ist zwar die Speicherung der Tinte in einem Kunstfaserreservoir, jedoch ist die stetig geringer werdende Tintenabgabemenge von erheblichem Nachteil. Die Reduzierung der Abgabe geht unter Umständen sogar soweit, daß das Schreibgerät, obwohl noch Tinte im Speicher ist, nur noch äußerst unregelmäßig schreibt; ein nicht unerheblicher Schreibflüssigkeitsrest verbleibt am Ende ungenutzt im Speicher.

Die aufgezeigten Nachteile können mit Schreibflüssigkeiten mittlerer Viskosität vermieden werden, welchen ein Thixotropierungsmittel beigemischt ist. Vorteile derartiger Schreibmittel sind das schnelle Trocknen der Schrift und der relativ hohe Tintenfluß bei einfacherer Speicherung der Schreibflüssigkeit. Eine derartige Schreibflüssigkeit ist im Ruhezustand ein festes Gel, das sich unter der Wirkung von Scherkräften zu einer Flüssigkeit niedriger Viskosität umwandelt.

Hierfür geeignete Schreibflüssigkeiten sind an sich z.B. aus DE 15 61 827 und DE 32 07 116 A1 bekannt. Die hier beschriebenen Schreibflüssigkeiten haben jedoch eine extrem hohe Viskosität, so daß sie, da kein Nachfolgeelement mit Druck verwendet wird, für die gewünschte Anwendung ungeeignet sind. In US 4 971 628, US 4 786 198, US 5 013 361, US 5 048 992, US 4 671 691, EP-A-0 587 291, EP-A-0 587 391 und EP-B-0 210 195 werden Präparationen beschrieben, welche zwar einen hohen Anteil an polaren Lösungsmitteln haben, dieser jedoch fast ausschließlich aus Wasser besteht, wobei der Anteil an organischen Lösungsmitteln gering ist. US 4 726 845 beschreibt zwar ebenfalls ein Gemisch aus verschiedenen polaren Lösungsmitteln, jedoch finden relativ unpolare Lösungsmittel hier keine Anwendung. Desgleichen bedient sich der Vorschlag nach WO 96/01879 nur polarer organischer Lösungsmittel. Relativ unpolare organische Mittel sind nicht vorgesehen. Auch DE 32 40 927 C2 beschreibt eine entsprechende Schreibflüssigkeit, ohne auf die spezielle Wechselwirkung zwischen polaren und relativ unpolaren Lösungsmitteln unter Zusatz eines speziellen Thixotropierungsmittels in dem gewünschten Viskositätsbereich einzugehen.

Aus DE-C-33 37 866 sind Tintenzusammensetzungen für Kugelschreiber bekannt. Eine Zusammensetzung enthält
a) 84,5 bis 99,7 Gewichtsteile eines wässrigen Mediums, bestehend aus 40 bis 95 Gew.-% Wasser und 60 bis 5 Gew.-% eines Benetzungsmittels,
b) 0,1 bis 15 Gewichtsteile Färbemittel und
c) 0,2 bis 0,45 Gewichtsteile Xanthan-Gum in 100 Gewichtsteilen der Gesamtzusammensetzung.

Eine andere Zusammensetzung enthält
a) 74,5 bis 99,2 Gewichtsteile eines wässrigen Mediums, bestehend aus 33 bis 95 Gew.-% Wasser und 67 bis 5 Gew.-% eines Benetzungsmittels,
b) 0,1 bis 15 Gewichtsteile Färbemittel,
c) 0,2 bis 0,45 Gewichtsteile Xanthan-Gum und
d) 0,5 bis 10 Gewichtsteile eines eindringfähigen organischen Lösungsmittels in 100 Gewichtsteilen der Gesamtzusammensetzung.

Schreibgeräte, welche solche sich durch erhöhte Viskosität auszeichnende Schreibflüssigkeiten verwenden, zeigen im Schreibversuch meist eine im Vergleich zu Schreibgeräten mit Fluidsystemen und speziellen Speichersystemen nicht konstante Tintenabgabe. Zu Beginn ist diese relativ hoch, wird dann jedoch nach und nach geringer, was zu einem mit der Zeit schlechter werdenden Schriftbild bzw. zur völligen Unbrauchbarkeit des Schreibgerätes führt. Daneben führt der stark reduzierte Tintenfluß zu einem unerwünschten harten, kratzenden Schreiben.

Ziel der vorliegenden Erfindung ist es, eine Schreibflüssigkeit zu entwickeln, mit welcher die oben beschriebenen Nachteile behoben werden. Somit liegt der Erfindung die Aufgabe zugrunde, eine Schreibflüssigkeit mit einem bestimmten Viskositätsbereich zu entwickeln, welche sich durch eine stetige Abgabekonstanz auszeichnet. Außerdem soll diese Schreibflüssigkeit ein weiches Schreiben ermöglichen.

Gelöst wird die vorstehende Aufgabe durch eine Schreibflüssigkeit nach Anspruch 1, d.h. durch die Verwendung eines speziellen Lösungsmittelgemisches, bei welchem die Viskosität der Einzelkomponenten in einem bestimmten Bereich liegt.

Weiterentwicklungen und Verbesserungen der im Anspruch 1 angegebenen Schreibflüssigkeit sind in den Unteransprüchen definiert.

Nicht nur Thixotropierungsmittel tragen bekanntermaßen zur Verdickung einer Schreibflüssigkeit bei. Vielmehr haben Lösungsmittel aus speziellen Viskositätsbereichen und deren Mischung untereinander eine zusätzlich verdickende Wirkung auf die mit Thixotropierungsmittel versetzte Schreibflüssigkeit.

Das solchermaßen bestimmte Lösungsmittelgemisch wird durch verschiedene Viskositätsbereiche der verwendeten Lösungsmittel eingegrenzt. Als geeignete Grenzen haben sich folgende herausgestellt, gemessen bei 20°C:
a) 0.2 - 2 [mPa·s]
b) 2 - 30 [mPa·s]
c) 30 - 2000 [mPa·s]

Für die einzelnen Viskositätsbereiche werden folgende Lösungsmittel verwendet.
- für a):: Wasser, Butylacetat, Pyridin, Tetrahydrofuran, Dioxan, Ethylacetat, o- und p-Xylol, Benzonitril, Anisol, Pyrrolidon.
- für b):: Ethylenglykol, Diethylenglykol, Propandiol, Butandiol, Dimethylformamid, Benzylalkohol, Benzaldehyd, Anilin, Butanol, Pentanol.
- für c):: Glycerin, Cyclohexanol, Cycloheptanol.

Dabei können eines oder mehrere vorstehender Lösungsmittel der Gruppen a), b) und c) in der erfindungsgemäßen Schreibflüssigkeit vorliegen.

Aus jedem Bereich (a) bis (c) ist mindestens ein Lösungsmittel von zumindest 3.8 Gew.%, höchstens aber 40.9 Gew.% vorhanden.

Es hat sich gezeigt, daß bei Verwendung eines bestimmten, in engen Grenzen liegenden Gemisches polarer hoch- und niedrigviskoser Lösungsmittel durch Zugabe einer bestimmten Menge relativ unpolarer niedrigviskoser Lösungsmittel die Gesamtviskosität ohne Zusatz von weiterem Thixotropierungsmittel stark erhöht werden kann. Der Gehalt an Thixotropierungsmittel läßt sich dadurch im Vergleich zu aus obigen Druckschriften bekannten Schreibflüssigkeiten drastisch verringern. So kann bei der Verwendung des oben beschriebenen Gemisches polarer und relativ unpolarer organischer Lösungsmittel durch Reduzierung der Menge an Thixotropierungsmittel auf ein Fünftel des ursprünglichen Gehaltes die gleiche Viskosität erreicht werden wie bei Systemen ohne dieses Gemisch. Dieses Phänomen kann so gedeutet werden, daß das relativ unpolare Lösungsmittel mit seiner polaren Gruppierung in Wechselwirkung mit den Funktionen des Biopolymers tritt. Die durch das Biopolymer aufgebaute Struktur wird durch die spezielle Wechselwirkung zwischen den Komponenten noch verstärkt. Sie zeichnen sich also durch eine synergetische Wirkung aus - eine scheinbar höhere Konzentration an Thixotropierungsmittel wird vorgetäuscht. Hierdurch wird vorteilhafterweise der Gesamtanteil an Thixotropierungsmitteln relativ gering gehalten bzw. stark reduziert, wobei einerseits die gewünschten und notwendigen Eigenschaften eines Thixotropierungsmittels vorhanden sind und andererseits die Vorteile einer höherviskosen Mischung, nämlich eine verbesserte Auslaufsicherheit, erreicht werden.

Sich solchermaßen auszeichnende Gemische polarer hoch- und niedrigviskoser Lösungsmittel in Kombination mit niedrigviskosen relativ unpolaren Lösungsmitteln gemäß vorliegender Erfindung haben außerdem ausgezeichnete Schmiereigenschaften.

Ein großer Vorteil des erfingungsgemäßen Gemisches ist, daß bei seiner Verwendung der Anteil des Thixotropierungsmittels reduziert ist. Da dieses ein Naturprodukt ist, kann seine Qualitätskonstanz und damit die des Gesamtgemisches nicht gewährleistet werden. Da nach dem erfindungsgemäßen Vorschlag der Anteil des Thixotropierungsmittels gering ist, ist das Gesamtgemisch nur einer sehr geringen Qualitätsdifferenz unterworfen.

Als Thixotropierungsmittel eignen sich aus der Literatur bekannte Mittel, wie z.B. Xanthan Gum, verschiedene Celluloseether, Agar Agar, Johannisbrotkernmmehl, Guarkernmehl, Gelatine.

Als Komponenten für das Lösungsmittelgemisch können die folgenden Verbindungsklassen Anwendung finden:
- Alkohole, ein- und mehrwertige, aliphatische und aromatische, auch gemischt, auch cyclisch
- Ether, aliphatische und aromatische, auch gemischt, auch Oligoether, auch cyclisch
- Ester, aliphatische und aromatische, auch gemischt, auch cyclisch
- Aldehyde, aliphatische und aromatische, auch gemischt, auch cyclisch
- Ketone, aliphatische und aromatische, auch gemischt, auch cyclisch
- Säureamide, aliphatische und aromatische, auch cyclisch
- Amine, aliphatische und aromatische, auch gemischt, auch cyclisch

Es können auch jeweils davon weiter abgeleitete Systeme oder Systeme mit mehreren funktionellen Gruppierungen Verwendung finden.

Folgende Mischungen sind Beispiele für die mit der Erfindung vorgeschlagene Schreibflüssigkeit:

### Beispiel 1

| Bestandteile | Gewichtsprozent |
|---|---|
| Wasser | 21.7 |
| Ethylenglykol | 20.0 |
| Diethylenglykol | 15.0 |
| Glycerin | 15.0 |
| Butylacetat | 5.0 |
| Thixotropierungsmittel | 0.1 |
| Acticid BX | 0.2 |
| Luconyl Blau 6900 | 20.0 |
| Harnstoff | 3.0 |

Es können jeweils auch andere Pigmente der Luconyl-Reihe (eingetragene Marke der BASF) verwendet werden.

### Beispiel 2

| Bestandteile | Gewichtsprozent |
|---|---|
| Wasser | 21.7 |
| Ethylenglykol | 20.0 |
| Diehtylenglykol | 15.0 |
| Glycerin | 15.0 |
| Heptanol | 5.0 |
| Thixotropierungsmittel | 0.1 |
| Acticid BX | 0.2 |
| Hostafine Blau B2G | 20.0 |
| Harnstoff | 3.0 |

Es können jeweils auch andere Pigmente der Hostafine-Reihe (eingetragene Marke der Höchst AG) verwendet werden.

### Beispiel 3

| Bestandteile | Gewichtsprozent |
|---|---|
| Wasser | 21.7 |
| Ethylenglykol | 20.0 |
| Diethylenglykol | 15.0 |
| Glycerin | 15.0 |
| Heptanal | 5.0 |
| Thixotropierungsmittel | 0.1 |
| Acticid BX | 0.2 |
| Titicaca Blau F-11 | 20.0 |
| Harnstoff | 3.0 |

Es können jeweils auch andere Pigmente der Titicaca-Reihe (eingetragene Marke von Mikuni) verwendet werden.

## Patentansprüche

1. Schreibflüssigkeit mit folgenden Bestandteilen:
1) Lösungsmittelgemisch polarer hoch- und niedrigviskoser Lösungsmittel in Kombination mit niedrigviskosen unpolaren Lösungsmitteln, bei welchem die Viskosität der Einzelkomponenten in einem bestimmten Bereich liegt, wobei das Gemisch als Lösungsmittel
a) Wasser, Butylacetat, Pyridin, Tetrahydrofuran, Dioxan, Ethylacetat, o- und p-Xylol, Benzonitril, Anisol und/oder Pyrrolidon im Viskositätsbereich von 0,2 bis 2 [mPa·s,];
b) Ethylenglykol, Diethylenglykol, Propandiol, Butandiol, Dimethylformamid, Benzylalkohol, Benzaldehyd, Anilin, Butanol und/oder Pentanol im Viskositätsbereich von 2 bis 30 [mPa·s] ; und
c) Glycerin, Cyclohexanol und/oder Cycloheptanol im Viskositätsbereich von 30 bis 2000 [mPa·s], gemessen bei T=20°C umfasst und aus jedem der Bereiche (a) bis (c) jeweils mindestens ein Lösungsmittel in einer Menge von 3,8 Gew.-% bis 40,9 Gew.-% vorhanden ist.
2) Thixotropierungsmittel zwischen 0,05 bis 0,15 Gew.-% zur synergistischen Beeinflussung der Viskosität und
3) flüssige Pigment- oder Farbstoffpräparationen zwischen 5,0 und 23,0 Gew. -%.

2. Schreibflüssigkeit nach-Anspruch 1, **dadurch gekennzeichnet, dass** der Viskositätsbereich der Schreibflüssigkeit im Bereich von 1.1 · 10³ bis 40 · 10³ [mPa·s] liegt.

3. Schreibflüssigkeit nach Anspruch 1, **dadurch gekennzeichnet, dass** der Wassergehalt zwischen 10,9 und 27,8 Gew.-% liegt.

4. Schreibflüssigkeit nach Anspruch 1, **dadurch gekennzeichnet, dass** das Thixotropierungsmittel ein Biopolymer ist.

5. Schreibflüssigkeit nach Anspruch 1, **gekennzeichnet durch** den Zusatz von Feststoffadditiven.

6. Schreibflüssigkeit nach Anspruch 5, **dadurch gekennzeichnet, dass** die Feststoffadditive Harnstoff oder sonstige Heteroatome beinhaltende organische Zusätze sind.

7. Schreibflüssigkeit nach Anspruch 6, **dadurch gekennzeichnet, dass** die Heteroatome des organischen Zusatzes Stickstoff, Phosphor, Sauerstoff, Schwefel, Fluor oder Chlor sind.

## Claims

1. A writing fluid with the following constituents:
1) a solvent mixture of polar solvents of high and low viscosity in combination with non-polar solvents of low viscosity, in which the viscosity of the individual constituents lies in a determined range, the mixture comprising as solvents
a) water, butyl acetate, - pyridine, tetrahydrofurane, dioxan, ethyl acetate, o- and p-xylol, benzonitrile, aniseed oil - and/or pyrrolidone in the viscosity range of 0.2 to 2 [mPa·s,] ;
b) ethylene glycol, diethylene glycol, propandiol, butandiol, dimethyl formamide, - benzyl alcohol, benzaldehyde, aniline, butanol and/or pentanol in the viscosity range of 2 to 30 [mPa·s]; and
c) glycerin, cyclohexanol and/or - cycloheptanol in the viscosity range of 30 to 2000 [mPa·s], measured at T = 20°C and from each of the ranges (a) to (c) at least one solvent is present in a quantity of 3.8 % by weight to 40.9 % by weight.
2) thixotropic agents between 0.05 to 0.15 % by weight for synergistically influencing the viscosity and
3) liquid pigment or colourant preparations between 5.0 and 23.0 % by weight.

2. A writing fluid according to Claim 1,
**characterised in that** the viscosity range of the writing fluid lies in the range of 1.1 · 10³ to 40 · 10³ [mPa · s].

3. A writing fluid according to Claim 1,
**characterised in that** the water content lies between 10.9 and 27.8 % by weight.

4. A writing fluid according to Claim 1,
**characterised in that** the thixotropic agent is a biopolymer.

5. A writing fluid according to Claim 1,
**characterised by** the addition of solids additives.

6. A writing fluid according to Claim 5,
**characterised in that** the solids additives are urea or other organic admixtures containing hetero atoms.

7. A writing fluid according to Claim 6,
**characterised in that** the hetero atoms of the organic admixture are nitrogen, phosphorous, oxygen, sulphur, fluorine or chlorine.

## Revendications

1. Liquide d'écriture comportant les constituants suivants :
1) un mélange de solvants à base de solvants polaires à forte et à faible viscosité en combinaison avec des solvants non polaires à faible viscosité, dans lequel la viscosité des composants individuels se situe dans une zone déterminée, comprenant comme solvant:
a) de l'eau, de l'acétate de butyle, de la pyridine, du tétrahydrofurane, du dioxanne, de l'acétate d'éthyle, de l'o- et du p-xylène, du benzonitrile, de l'anisole, et/ou de la pyrrolidone dans une zone de viscosité allant de 0,2 à 2 [mPa.s],
b) de l'éthylèneglycol, du diêthylèneglycol, du propanediol, du butanediol, du diméthylformamide, de l'alcool benzylique; du - benzaldéhyde, de l'aniline, du butanol, et/ou du pentanol dans une zone de viscosité allant de 2 à 30 [mPa.s] et
c) du glycérol, du cyclohexanol, et/ou du cycloheptanol dans une zone de viscosité allant de 30 à 2 000 [mPa.s] mesurée à T = 20°C,
et dont chacune des zones a) à c) contient au moins un solvant en une quantité allant de 3,8 % en poids à 40,9 % en poids.
2) un agent thixotropique compris entre 0,05 et 0,15 % en poids en vue d'exercer une influence synergique sur la viscosité et
3) des préparations liquides de pigments ou de colorants comprises entre 5,0 et 23,0 % en poids.

2. Liquide d'écriture selon la revendication 1,
**caractérisé en ce que**
la zone de viscosité du liquide d'écriture se situe dans la plage de 1,1 x 10³ à 40 x 10³ [mPa·s].

3. Liquide d'écriture selon la revendication 1,
**caractérisé en ce que**
la teneur en eau se situe entre 10,9 et 27,8 % en poids.

4. Liquide d'écriture selon la revendication 1,
**caractérisé en ce que**
l'agent thixotropique est unibiopolymère.

5. Liquide d'écriture selon la revendication 1,
**caractérisé par**
l'addition d'additifs en produits solides.

6. Liquide d'écriture selon la revendication 5,
**caractérisé en ce que**
les additifs en produits solides sont de l'encre ou d'autres additifs organiques contenant des hétéroatomes.

7. Liquide d'écriture selon la revendication 6,
**caractérisé en ce que**
les hétéroatomes de l'additif organique sont de l'azote, du phosphore, de l'oxygène, du soufre, du fluor ou du chlore.
